(19) Europäisches Patentamt
European Patent Office
Office européen des brevets

(11) Publication number: 0 066 102 B1

(12) **EUROPEAN PATENT SPECIFICATION**

(45) Date of publication of patent specification: **18.10.89**

(51) Int. Cl.$^4$: **C 25 B 9/00,** C 25 B 13/08

(21) Application number: **82103790.0**

(22) Date of filing: **03.05.82**

(54) **Ion exchange membrane cell and electrolysis with use thereof.**

(30) Priority: **26.05.81 JP 78680/81**

(43) Date of publication of application:
**08.12.82 Bulletin 82/49**

(45) Publication of the grant of the patent:
**18.10.89 Bulletin 89/42**

(84) Designated Contracting States:
**DE FR GB IT NL SE**

(56) References cited:
**EP-A-0 029 751**
**EP-A-0 047 080**
**EP-A-0 050 373**
**US-A-4 124 458**
**US-A-4 168 216**
**US-A-4 176 215**

(73) Proprietor: **ASAHI GLASS COMPANY LTD.**
**No. 1-2, Marunouchi 2-chome**
**Chiyoda-ku, Tokyo (JP)**

(72) Inventor: **Oda, Yoshio**
**No. 435, Kamisugeta-cho Hodogaya-ku**
**Yokohama-shi Kanagawa-ken (JP)**
Inventor: **Morimoto, Takeshi**
**No. 543, Sanmaicho Kanagawa-ku**
**Yokohama-shi Kanagawa-ken (JP)**
Inventor: **Suzuki, Kohji**
**No. 543 Sanmaicho Kanagawa-ku**
**Yokohama-shi Kanagawa-ken (JP)**

(74) Representative: **Wächtershäuser, Günter, Dr.**
**Tal 29**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 066 102 B1

**Description**

The present invention relates to a method of providing an electrolytic cell having electrodes separated by a cation exchange membrane.

As a process for producing an alkali metal hydroxide and chlorine by the electrolysis of the abovementioned aqueous solution, particularly an aqueous solution of an alkali metal chloride, a diaphragm method has now been used in place of a mercury method with a view to preventing environmental pollution. Further, in order to efficiently obtain an alkali metal hydroxide having a high purity in a high concentration, it has been proposed and put into practical use to employ an ion exchange membrane.

On the other hand, from the standpoint of energy saving, it is desired to minimize the cell voltage in the electrolysis of this type. For this purpose, various methods have been proposed. However, in some cases, the cell voltage reduction is not yet adequate and in other cases, the electrolytic cell tends to be intricate, and thus no adequately satisfactory solution has yet been made.

The present inventors have conducted a research with an aim to carry out electrolysis of an aqueous solution at a minimal load voltage, and as a result, it has been found that the above object can be accomplished with use of a laminated cation exchange membrane having a layer with sulfonic groups and a layer with carboxylic groups. The membrane has a screen-printed gas and liquid permeable porous non-electrode or non-electrocatalytic layer on at least one side thereof. This has been made the subject matter of European Patent Publication No. 0,029,751.

The effectiveness for reducing the cell voltage obtainable by the use of such a cation exchange membrane having a porous layer on its surface, varies depending upon the material constituting the porous layer, the porosity and the thickness of the layer. Howeever, it is regarded as an unexpected phenomenon that a high level of cell voltage-reducing effectiveness is obtainable even when the porous layer is made of an electrically non-conductive material as will be described hereinafter, or that the cell voltage can be reduced even when such a cation exchange membrane is disposed with a space from the electrode, whereby the electrode may not necessarily be disposed in contact with the membrane. Further, according to EP—A—0,039,189 it has been suggested to modify a laminated cation exchange membrane having a layer with sulfonic groups and a layer with carboxylic groups by coating one side only with a porous layer made from a paste or slurry.

It is an object of the present invention to provide a method of providing an electrolytic cell with a reduced cell voltage and an improved current efficiency.

The present invention provides an ion exchange membrane cell in accordance with Claim 1 for attaining this object.

The electrolytic cation exchange membrane according to the present invention provides a minimal cell voltage and a high current efficiency which have not been obtainable by the conventional methods, and such superior effectiveness is obtainable even from the initial stage of the electrolysis when such a cation exchange membrane is used. Thus, the industrial significance of the cation exchange membrane of the present invention is extremely high.

The gas and liquid permeable porous layer provided on the cation exchange membrane according to the present invention is formed by bonding particles onto the membrane surface. The amount of the particles applied to form the porous layer varies depending upon the nature and size of the particles. However, according to the research made by the present inventors, it has been found that the amount of the particles is preferably from 0.001 to 100 mg., especially from 0.005 to 50 mg. per 1 $cm^2$ of the membrane surface. If the amount is too small, the desired level of effectiveness expected by the present invention is not obtainable. On the other hand, the use of an excessively large amount tends to lead to an increase of the membrane resistance.

The particles forming the gas and liquid permeable porous layer on the surface of the cation exchange membrane of the present invention may be electrically conductive or non-conductive and may be made of inorganic material or organic material, so long as they do not function as an electrode. However, the particles are preferably made of material having corrosion resistance against the electrolyte solution. Moreover, an inorganic material is more preferably used than an organic material because of its superior performance in the voltage reduction.

As preferred specific material for the porous layer on the anode side, there may be used a single substance, an alloy, an oxide, a hydroxide a nitride or a carbide of a metal of Group IV-b (preferably silicon, germanium, tin or lead), Group IV-A (preferably titanium, zirconium or hafnium) or Group V-A (preferably niobium or tantalum) of the Periodic Table, an iron group metal (iron, cobalt or nickel), chromium, manganese or boron, polytetrafluoroethylene, or an ethylene-tetrafluoroethylene copolymer.

On the other hand, for the porous layer on the cathode side, there may preferably be used, in addition to the materials useful for the formation bf the porous layer on the anode side, silver, zirconium or their alloys, stainless steel, carbon (active carbon or graphite), a polyamide resin, a polysulfonic resin, a polyphenyleneoxide resin, a polyphenylenesulfide resin, a polypropylene resin or a polyimide resin.

In the formation of the porous layers, the abovementioned particles are used preferably in a form of powder having a particle size of from 0.01 to 300 μ, especially from 0.1 to 100 μ. In some cases, there may be used a binder, for example, a fluorocarbon polymer such as polytetrafluoroethylene or

polyhexafluoroethylene, or a viscosity controlling agent, for example, a cellulose material such as carboxymethyl cellulose, methyl cellulose or hydroxyethyl cellulose or a water-soluble material such as polyethylene glycol, polyvinyl alcohol, polyvinyl pyrrolidone, sodium polyacrylate, polymethylvinyl ether, casein or polyacrylamide. Such a binder or viscosity controlling agent is used preferably in an amount of from 0.1 to 50% by weight, especially from 0.5 to 30% by weight based on the abovementioned powder.

Further, if desirable, it is possible to incorporate a suitable surfactant such as a long chain hydrocarbon or a fluorinated hydrocarbon and graphite or other conductive filler to facilitate the bonding of the particles or groups of particles onto the membrane surface.

To bond the particles or groups of particles onto the ion exchange membrane to form a porous layer, the abovementioned conductive or non-conductive particles and, if necessary, a binder and a viscosity controlling agent, are sufficiently mixed in a suitable medium such as an alcohol, ketone, ether or hydrocarbon, and the paste of the mixture thus obtained is applied to the membrane surface by e.g. screen printing. Instead of the paste of the mixture comprising the above-mentioned particles or groups of particles, a syrup or a slurry of the mixture may be prepared and it may be sprayed onto the membrane surface to bond the particles or groups of particles thereto.

The particles or groups of particles applied to the ion exchange membrane to form a porous layer are then preferably heat-pressed on the ion exchange membrane at a temperature of from 80 to 220°C under pressure of from 1 to 150 $kg/cm^2$, or 1 to 150 kg/cm with use of a flat press or rolls press respectively. It is preferred to partially embed the particles or groups of particles into the membrane surface.

The porous layer formed by the particles or groups of particles bonded to the membrane surface preferably has a porosity of at least 10 to 95%, especially at least 30 to 90% and a thickness of from 0.01 to 100 μ, especially from 0.1 to 50 μ, which is less than that of the membrane.

The porous layer formed on the membrane surface, may be a thick layer in which a great amount of particles are bonded to the membrane surface. Otherwise, it is possible to form the layer to have a single layer structure in which the particles or groups of particles are independently bonded to the membrane surface without being in contact with one another. In such a case, the amount of the particles to be used for the formation of the porous layer can substantially be reduced and it is thereby possible in some cases to simplify the means for forming the porous layer.

Further, instead of applying the particles onto the membrane surface as mentioned above, it is possible to form the porous layer of the present invention also by bonding to the membrane surface a porous layer preliminarily formed to have the abovementioned properties. In such a case, preformed porous layer may advantageously be formed on a film made of a polymer such as polytetrafluoroethylene and polyester, and then the resulting preformed layer on said film is transferred to a surface of a membrane.

The cation exchange membrane on which the porous layer is formed according to the present invention, must be a membrane formed by a fluorinated polymer having sulfonic acid groups and ion exchange groups having weaker acidity than the sulfonic acid groups. The membrane of the present invention has weakly acidic groups as well as sulfonic acid groups (i.e. $—SO_3M$ where M is hydrogen or an alkali metal). As the weakly acidic groups, there may be mentioned carboxylic acid groups (i.e. —COOM where M is as defined above), phosphoric acid groups (i.e. $—PO_3M_2$ where M is as defined above) or hydroxyl groups (i.e. —OM where M is as defined above). Among them, the carboxylic acid groups are particularly preferred.

The ion exchange capacity of the membrane is preferably from 0.5 to 4.0 milliequivalent/gram dry polymer, especially from 0.7 to 2.0 milliequivalent/gram dry polymer each for the sulfonic acid groups and the weakly acidic ion exchange groups. It is generally desirable for the electrochemical characteristics of the membrane, such as electric resistance, that the weakly acidic ion exchange groups have a greater ion exchange capacity than the sulfonic acid groups.

As the fluorinated polymers having sulfonic acid groups or weakly acidic groups according to the present invention, there may be used a variety of fluorinated polymers, but among them, polymers having the recurring units (a) and (b) are particularly preferred.

(a) $—(—CF_2—CXX'—)—$,

(b) 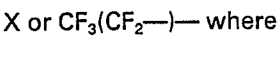

wherein X is —F, —Cl, —H, or $—CF_3$, X' is X or $CF_3(CF_2—)—$ where m is from 1 to 5, Y is selected from the following:

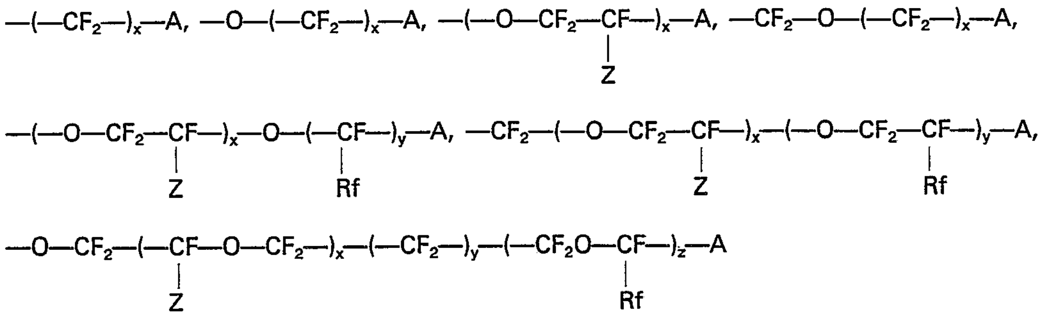

where x, y and z respectively represent an integer of 0 to 10, Z and Rf respectively represent —F or a perfluoroalkyl group having from 1 to 10 carbon atoms, and A represents $—SO_3M$, —COOM, $—PO_3M_2$ or a functional group convertible into these groups, such as $—SO_2F$, —CN, —COF, or —COOR, where M is hydrogen or an alkali metal and R is an alkyl group having from 1 to 10 carbon atoms.

As mentioned above, the cation exchange membrane to be used in the present invention is formed to have an ion exchange capacity of from 0.5 to 4.0 milliequivalent/gram dry polymer. In the case of forming the ion exchange membrane from a copolymer comprising the polymer units (a) and (b), it is preferred that the polymer units (b) constitute from 1 to 40 molar %, especially from 3 to 25 molar %.

The ion exchange membrane may be prepared by various methods per se known, and if required, the ion exchange membrane may preferably be reinforced by a woven fabric such as cloth or net, or non-woven fabric, or fibril made of a fluorinated polymer such as polytetrafluoroethylene, or by a mesh or perforated material made of metal. The ion exchange membrane of the present invention preferably has a thickness of from 20 to 1000 μ, especially from 50 to 500 μ.

When the porous layer is formed on the membrane surface on both sides of the ion exchange membrane, the ion exchange groups of the membrane should take a suitable form not to lead to decomposition thereof. For instance, in the case of carboxylic acid groups, they should preferably take a form of an acid or an ester, and in the case of sulfonic acid groups, they should preferably take a form of $—SO_2F$.

Since the ion exchange membrane is formed by laminating two kinds of fluorinated polymer films, the thickness of the two films may not necessarily be the same but may be optionally varied depending on the natures of the respective copolymers. However, from the study made by the present inventors, it has been found that the film of a fluorinated polymer containing weakly acid groups must have a thickness of 1 to 200 μ especially 5 to 200 μm depending on the thickness of the ion exchange membrane. The lamination of the two fluorinated copolymer films may be conducted by any suitable method. However, it is necessary that the two films are made into an integral form by the lamination. For instance, the lamination is carried out by pressing preferably at a temperature of from 100 to 350°C and under pressure of from 0.5 to 100 $kg/cm^2$.

As the membrane of the present invention has sulfonic acid groups on one side thereof and weakly acidic groups on the other side, it is preferred to arrange the membrane so that the surface having the weakly acidic groups faces the cathode in the electrolytic cell.

Any type of the electrode may be used for the membrane of the present invention. For instance, there may be used foraminous electrodes such as a perforated plate, a net or an expanded metal. As a typical example of the foraminous electrode, there may be mentioned an expanded metal having a major length of from 1.0 to 10 mm, a minor length of from 0.5 to 10 mm, a width of a mesh of from 0.1 to 1.3 mm and a opening area of from 30 to 90%. Further, a plurality of electrode meshes may be used. In such a case, it is preferred that a plurality of electrode meshes having different opening areas are arranged so that meshes having a less opening area are set closer to the membrane.

The anode is usually made of a platinum group metal or a conductive oxide or a conductive reduced oxide thereof. On the other hand cathode is usually made of a platinum group metal or a conductive oxide thereof or an iron group metal.

As the platinum group metal there may be mentioned Pt, Rh, Ru, Pd and Ir. As the iron group metal, there may be mentioned iron, cobalt, nickel, Raney nickel, stabilized Raney nickel, stainless steel a stainless steel treated by etching with a base (US Patent No. 4,255,247) Raney nickel plated cathode (US Patent No. 4,170,536 and No. 4,116,804) nickel rhodanate plated cathode (US Patent No. 4,190,514 and No. 4,190,516).

When foraminous electrodes, are used, they may be made of the materials for the anode or the cathode by themselves. When the platinum metal or a conductive oxide thereof is used, it is usually preferable to coat such material on an expanded metal made of a valve metal such as titanium or tantalum.

When the electrodes are placed in the electrolytic cell of the present invention, they may be disposed to contact the ion exchange membrane, or they may be placed with an appropriate space from the ion exchange membrane. The electrodes are preferably moderately pressed to the porous layer at a pressure of e.g. from 0.01 to 5.0 $kg/cm^2$ rather than forcibly pressed to the ion exchange membrane via the porous layer.

The electrolytic cell used in the present invention may be a monopolar or bipolar type so long as it has the abovementioned structure. The electrolytic cell used in the electrolysis of an aqueous solution of an alkali metal chloride, is made of a material being resistant to the aqueous solution of the alkali metal chloride and chlorine such as valve metal like titanium in the anode compartment and is made of a material being resistant to an alkali metal hydroxide and hydrogen such as iron, stainless steel or nickel in the cathode compartment.

In the present invention, the process condition for the electrolysis of an aqueous solution of an alkali metal chloride can be the known condition. For instance, an aqueous solution of an alkali metal chloride, (from 2.5 to 5.0 Normal) is fed into the anode compartment and water or a dilute solution of an alkli metal hydroxide is fed into the cathode compartment and the electrolysis is preferably conducted at a temperature of from 80 to 120°C and at a current density of from 10 to 100 $A/dm^2$. In this case, heavy metal ions such as calcium or magnesium ions in the aqueous solution of the alkali metal chloride tend to lead to degradation of the ion exchange membrane, and therefore, it is desirable to minimize the presence of such heavy metal ions. Further, in order to prevent the generation of oxygen at the anode as far as possible, an acid such as hydrochloric acid may be added to the aqueous alkali metal chloride solution.

In the foregoing, the use of the membrane of the present invention has been described primarily with respect to the electrolysis of an aqueous alkali metal chloride solution. However, it shbuld be understood that the membrane of the present invention is likewise applicable to the electrolysis of water, a halogen acid (hydrochloric acid or hydrobromic acid).

Now, the present invention will be described with reference to Examples which are provided for the purpose of illustration and are not intended to limit the present invention.

Paste for screen printing

A mixture comprising 10 parts of α-silicon carbide powder having an average particle size of 5 μ, one part of modified PTFE particles having a particle size of not more than 0.5 μ and prepared by coating particles of polytetrafluoroethylene with a copolymer of tetrafluoroethylene and $CF_2=CFO(CF_2)_3COOCH_3$, 0.3 part of methyl cellulose (2% aqueous solution having a viscosity of 1500 cps), 14 parts of water, 2 parts of cyclohexanol and one part of cyclohexanone, was kneaded to obtain a paste.

Example 1

A film (thickness: 250 μ) of a copolymer (ion exchange capacity: 1.03 milliequivalent/gram polymer) of tetrafluoroethylene and

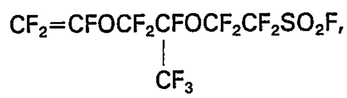

reinforced with tetrafluoroethylene cloth (70 mesh), was laid on a film (thickness: 30 μ) of a copolymer (ion exchange capacity: 1.30 milliequivalent/gram polymer) of tetrafluoroethylene and

$$CF_2=CFO(CF_2)_3COOCH_3,$$

and they were laminated by roll-press method under 40 $kg/cm^2$ at 200°C.

On the membrane surface constituting the anode side surface of the said laminated membrane and composed of a copolymer of tetrafluoroethylene and

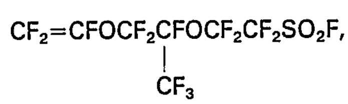

rutile type titanium oxide powder having an average particle size of 5 μ was screen-printed with use of the above paste and dried, and on the opposite cathode side membrane surface, α-type silicon carbide powder having an average particle size of 5 μ was screen-printed and dried.

Thereafter, titanium oxide powder and silicon carbide powder were press-bonded to the ion exchange membrane at a temperature of 140°C under pressure of 30 $kg/cm^2$. The amounts of the titanium oxide powder and the silicon carbide powder were 1.1 mg and 0.8 mg, respectively, per 1 $cm^2$ of the membrane surface. Thereafter, the ion exchange membrane was subjected to hydrolysis by dipping it in an aqueous solution containing 25% by weight of sodium hydroxide at 90°C for 16 hours.

Example 2

A laminated membrane was obtained in the same manner as in Example 1 except that as the cathode side film, there was used a film having an ion exchange capacity of 1.15 milliequivalent/gram polymer and a thickness of 30 μ and composed of a copolymer of tetrafluoroethylene and

$$CF_2=CFOCF_2CF(CF_3)O(CF_2)_3COOCH_3.$$

On the membrane surface constituting the anode side surface of the laminated membrane and composed of the copolymer of tetrafluoroethylene and

$$CF_2{=}CFOCF_2\underset{\underset{CF_3}{|}}{C}FOCF_2CF_2SO_2F,$$

titanium oxide powder having an average particle size of 5 μ was screen-printed with use of the above paste as used in Example 1 and dried and on the opposite cathode membrane surface, α-type silicon carbide powder having an average particle size of 5 μ was screen-printed and dried.

Thereafter, titanium oxide powder and silicon carbide powder were press-bonded to the ion exchange membrane at a temperature of 140°C under pressure of 30 $kg/cm^2$. The amounts of the titanium oxide powder and the silicon carbide powder were 1.1 mg, and 0.8 mg, respectively, per 1 $cm^2$ of the membrane surface. Then, the ion exchange membrane was subjected to hydrolysis by dipping it in an aqueous solution containing 25% by weight of sodium hydroxide at a temperature of 90°C for 16 hours.

Examples 3 to 7

Cation exchange membranes having a porous layer on their membrane surface were prepared in the same manner as in Example 1 except that the modified PTFE was omitted from the paste in Example 1 and the composition of the paste was changed as shown in Table 1 where the materials and the sizes and the amounts of the particles are indicated.

The particles used were prepared from the commercially available materials by pulverizing and classifying them to have the particle sizes as shown in Table 1. Further, from the microscopic observation of the porous layer on the membrane surface in Example 5, it was observed that the particles or groups of particles were bonded to the membrane surface with a space from one another.

TABLE 1

| Example | Anode side material (average particle size) amount of deposition | Cathode side material (average particle size) amount of deposition |
|---|---|---|
| 3 | $SnO_2$ (3 μ)<br>1.1 $mg/cm^2$ | NiO (6 μ)<br>1.5 $mg/cm^2$ |
| 4 | $Fe_2O_3$ (1 μ)<br>0.05 $mg/cm^2$ | β-SiC (5 μ)<br>0.1 $mg/cm^2$ |
| 5 | $ZrO_2$ (4 μ)<br>0.9 $mg/cm^2$ | $B_4C$ (2 μ)<br>1.2 $mg/cm^2$ |
| 6 | $Fe(OH)_2$(0.2 μ)<br>0.2 $mg/cm^2$ | Graphite (2 μ)<br>0.4 $mg/cm^2$ |
| 7 | $ZrO_2$ (8 μ)<br>1.0 $mg/cm^2$ | α-SiC (5 μ)<br>1.0 $mg/cm^2$ |

Comparative Example 1

An ion exchange membrane having a titanium oxide layer on its anode side surface and a silicone carbide layer on its cathode side surface, was prepared in the same manner as in Example 1 except that a film having a thickness of 280 μ and composed of a copolymer (ion exchange capacity: 1.03 milliequivalent/gram polymer) of tetrafluoroethylene and

$$CF_2{=}CFOCF_2\underset{\underset{CF_3}{|}}{C}FOCF_2CF_2SO_2F$$

was used as the ion exchange membrane.

Comparative Example 2

An ion exchange membrane having a titanium oxide layer on its anode side surface and a silicon carbide layer on its cathode side surface, was prepared in the same manner as in Example 1 except that a

film having a thickness of 280 μ and composed of a copolymer (ion exchange capacity: 1.44 milliequivalent/gram polymer) of tetrafluoroethylene and

$$CF_2{=}CFO(CF_2)_3COOCH_3,$$

was used as the ion exchange membrane.

Now, the electrolytic performances of the ion exchange membranes of the present invention will be described with reference to Application Examples.

Application Example 1

An anode having a low chlorine overvoltage and made of an expanded metal (major length: 5 mm, minor length: 2.5 mm) coated with a solid solution of ruthenium oxide, irridium oxide and titanium oxide, was press-fixed on the anode side surface of the ion exchange membrane and a cathode having a low hydrogen overvoltage and made of a SUS 304 expanded metal (major length: 5 mm, minor length: 2.5 mm) subjected to etching treatment in a 52 wt.% sodium hydroxide aqueous solution at 150°C for 52 hours, was press-fixed on the cathode side surface of the ion exchange membrane. Electrolysis was carried out at 90°C under 40 A/dm$^2$ while supplying an aqueous solution of 3.5 N sodium chloride to the anode compartment and water to the cathode compartment and maintaining the sodium chloride concentration in the anode compartment at a level of 3.5 N and the sodium hydroxide concentration in the cathode compartment at a level of 35% by weight, whereupon the results as shown in Table 2 were obtained.

In the Application Examples, the ion exchange membranes having a porous layer are identified by the numbers of Examples.

TABLE 2

| Membranes | Cell voltage (V) | Current efficiency (%) |
|---|---|---|
| Example 1 | 3.24 | 96.0 |
| Example 2 | 3.27 | 95.8 |
| Example 3 | 3.25 | 95.5 |
| Example 4 | 3.29 | 96.5 |
| Example 5 | 3.26 | 95.3 |
| Example 6 | 3.24 | 95.0 |
| Example 7 | 3.22 | 96.0 |
| Comparative Example 1 | 3.22 | 79.5 |
| Comparative Example 2 | 3.20 | 92.6 |

Application Example 2

Electrolysis was carried out in the same manner as in Application Example 1 except that the anode and the cathode were not press-fixed on the ion exchange membrane and they were respectively placed with a space of 1.0 mm from the ion exchange membrane, whereupon the results as shown in Table 3 were obtained.

TABLE 3

| Membranes | Cell voltages (V) | Current efficiency (%) |
|---|---|---|
| Example 1 | 3.25 | 96.2 |
| Example 2 | 3.29 | 95.9 |
| Example 3 | 3.26 | 95.7 |
| Example 4 | 3.30 | 96.6 |
| Example 5 | 3.27 | 95.8 |
| Example 7 | 3.29 | 96.1 |
| Comparative Example 2 | 3.23 | 92.9 |

**Claims**

1. A method of providing an electrolytic cell having electrodes separated by a cation exchange membrane, which method comprises

integrally forming a cation exchange membrane by laminating a fluorinated polymer film having sulfonic acid groups and a fluorinated polymer film having more weakly acidic groups and a thickness of 1 to 200 µm,

coating both surfaces of the formed membrane with a paste or a slurry of particles of an electrically non-conductive material which is electrochemically inactive or of an electrically conductive material which has a higher overvoltage than the electrode which the respective surface is to be facing,

drying the applied coating to form a gas and liquid permeable porous layer which is thinner than said cation exchange membrane and has a thickness of at least 0.01 µm

and inserting the coated membrane between the electrodes.

2. A method according to Claim 1 wherein the gas and liquid permeable porous layer is formed by an electrically conductive or non-conductive inorganic or organic material and applied in an amount of from 0.001 to 100 $mg/cm^2$.

3. A method according to Claim 2 wherein said inorganic material is composed of a single substance, an alloy, an oxide, a hydroxide, a nitride or a carbide of a metal of Group IV-A, IV-B, or V-A of the Periodic Table, an iron group metal, chromium, manganese or boron.

4. A method according to Claim 2 wherein the organic material is a fluorinated resin, a polyamide resin, a polysulfonic resin, a polyphenyleneoxide resin, a polyphenylenesulfide resin, a polypropylene resin, or a polyimide resin.

5. A method according to any one of Claims 1 to 4, wherein the polymer has for each of the sulfonic acid groups and ion exchange groups having weaker acidity an ion exchange capacity of from 0.5 to 4.0 milliequivalents/gram dry polymer.

6. A method according to Claim 1 or 5 wherein the ion exchange groups having weaker acidity are carboxylic acid groups or phosphoric acid groups.

7. A method according to any one of Claims 1 to 6, wherein said fluorinated polymer has recurring units (a) and (b).

(a) $—(—CF_2—CXX'—)—$

(b) $—(—CF_2—CX—)—$ (with $Y—A$ attached to C of CX)

wherein X represents a fluorine, chlorine or hydrogen atom or $—CF_3$, X' represents X or $CF_3(CF_2—)_m—$; m represents an integer of 1 to 5; Y represents the following unit;

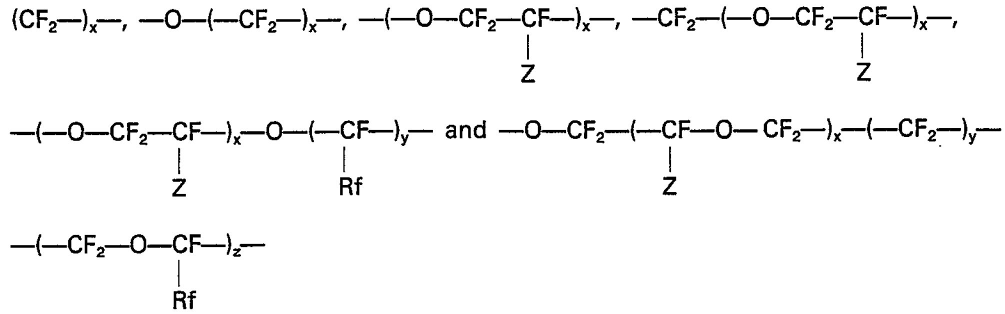

and

x, y and z respectively represent an integer of 1 to 10; Z and Rf represent —F or a $C_1$—$C_{10}$ perfluoroalkyl group; and A represents —COOM or —$SO_3M$ or a functional group which is convertible into —COOM or —$SO_3M$ by hydrolysis or neutralization such as —CN, —COF, —COOR or —$SO_2F$, and M represents hydrogen or an alkali metal atom.

8. A method according to Claim 7, wherein said ion exchange membrane is in contact with at least one of the anode and the cathode.

**Patentansprüche**

1. Verfahren zur Schaffung einer Elektrolysezelle mit Elektroden, die durch eine Kationenaustauschmembran getrennt sind, umfassend:

einteilige Ausbildung einer Kationenaustauschmembran durch Laminierung eines fluorierten Polymerfilms mit Sulfonsäuregruppen und eines fluorierten Polymerfilms mit schwächer sauren Gruppen und einer Dicke von 1 bis 200 µm,

Beschichtung beider Oberflächen der gebildeten Membran mit einer Paste oder einer Aufschlämmung von Teilchen eines elektrisch nicht-leitenden Materials, welches elektrochemisch inaktiv ist oder eines elektrisch leitenden Materials, welches eine höhere Überspannung aufweist als die Elektrode, der die jeweilige Oberfläche zugewandt werden soll,

Trocknung der applizierten Beschichtung unter Ausbildung einer gas- und flüssigkeitspermeablen, porösen Schicht, welche dünner ist als die erwähnte Kationenaustauschmembran und eine Dicke von mindestens 0,01 µm aufweist, und

Einsetzen der beschichteten Membran zwischen die Elektroden.

2. Verfahren gemäß Anspruch 1, wobei die gas- und flüssigkeitspermeable, poröse Schicht gebildet wird durch ein elektrisch leitfähiges oder nicht-leitfähiges anorganisches oder organisches Material und in einer Menge von 0,001 bis 100 mg/$cm^2$ appliziert ist.

3. Verfahren gemäß Anspruch 2, wobei das anorganische Material zusammengesetzt ist aus einer einzigen Substanz, einer Legierung, einem Oxid, einem Hydroxid, einem Nitrid oder einem Carbid von einem Metall der Gruppe IV-A, IV-B oder V-A des Periodensystems, einem Eisengruppenmetall, Chrom, Mangan oder Bor.

4. Verfahren gemäß Anspruch 2, wobei das organische Material ein fluoriertes Harz, ein Polyamidharz, ein Polysulfonsäureharz ein Polyphenyloxidharz, ein Polyphenylensulfidharz, ein Polypropylenharz oder ein Polyimidharz ist.

5. Verfahren gemäß einem der Ansprüche 1 bis 4, wobei das Polymere sowohl hinsichtlich der Sulfonsäuregruppen als auch hinsichtlich der Ionenaustauschgruppen mit schwächerer Acidität eine Ionenaustauschkapazität von 0,5 bis 4,0 mäqu/g trockenes Polymeres aufweist.

6. Verfahren gemäß Anspruch 1 oder 5, wobei die Ionenaustauschgruppen mit schwächerer Acidität Carbonsäuregruppen oder Phosphorsäuregruppen sind.

7. Verfahren gemäß einem der Ansprüche 1 bis 6, wobei das fluorierte Polymere Wiederholungseinheiten (a) und (b) aufweist

(a) $-(-CF_2-CXX'-)-$

(b) 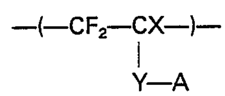

wobei X für ein Fluor-, Chlor- oder Wasserstoffatom oder für —$CF_3$ steht; X' für X oder $CF_3(CF_2)_m$ steht; m für eine ganze Zahl von 1 bis 5 steht; Y für eine der folgenden Einheiten steht:

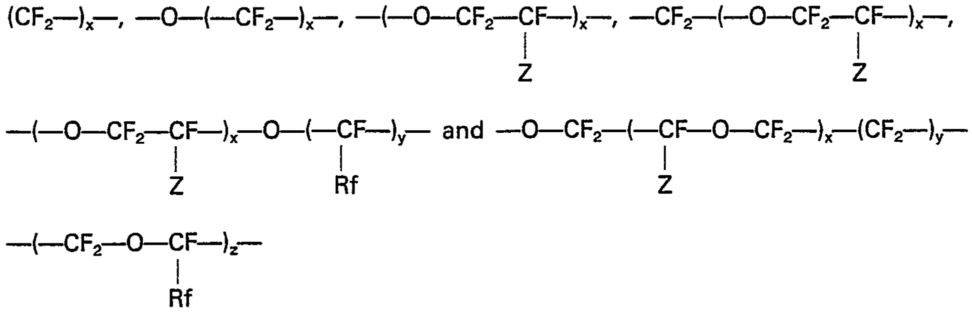

and

x, y und z jeweils eine ganze Zahl von 1 bis 10 bedeuten; Z und Rf für —F oder eine $C_1$—$C_{10}$-Perfluoroalkylgruppe stehen und A für —COOM oder —$SO_3M$ steht oder eine funktionelle Gruppe, welche durch Hydrolyse oder Neutralisation in —COOM oder —$SO_3M$ umwandelbar ist wie beispielsweise —CN, —COF, —COOR oder —$SO_2F$, und M für Wasserstoff oder ein Alkalimetallatom steht.

8. Verfahren gemäß Anspruch 7, wobei die erwähnte Ionenaustauschmembran mit mindestens einer von der Anode und der Kathode in Kontakt steht.

**Revendications**

1. Procédé de fabrication d'une cellule électrolytique ayant des électrodes séparées par une membrane échangeuse de cations, ledit procédé consistant à:

former d'un seul tenant une membrane échangeuse de cations en réalisant une structure stratifiée à partir d'un film de polymère fluoré présentant des groupes acide sulfonique et d'un film de polymère fluoré présentant des groupes plus faiblement acides et une épaisseur de 1 à 200 µm;

enduire les deux surfaces de la membrane formée d'une pâte ou d'une bouillie de particules d'une matière électriquement non-conductrice qui est électrochimiquement inactive ou d'une matière électriquement conductrice qui présente une surtension plus élevée que celle de l'électrode à laquelle la surface respective doit faire face;

sécher le revêtement appliqué pour former une couche poreuse, perméable aux gaz et aux liquides, qui est moins épaisse que ladite membrane échangeuse de cations et présente une épaisseur d'au moins 0,01 µm; et

introduire la membrane enduite entre les électrodes.

2. Procédé selon la revendication 1, dans lequel la couche poreuse, perméable aux gaz et aux liquides, est formée par une matière minérale ou organique, électriquement conductrice ou non-conductrice, et appliquée en une quantité allant de 0,001 à 100 $mg/cm^2$.

3. Procédé selon la revendication 2, dans lequel ladite matière minérale est constituée par une substance simple, un alliage, un oxyde, un hydroxyde, un nitrure ou un carbure d'un métal des Groupes IV-A, IV-B ou V-A de la Classification Périodique, un métal du groupe du fer, le chrome, le manganèse ou le bore.

4. Procédé selon la revendication 2, dans lequel la matière organique est une résine fluorée, une résine de polyamide, une résine polysulfonique, une résine de poly(oxyde de phénylène), une résine de poly(sulfure de phénylène), une résine de polypropylène, ou une résine de polyimide.

5. Procédé selon l'une des revendications 1 à 4, dans lequel le polymère présente, pour chacun des groupes acide sulfonique et des groupes d'échange d'ions ayant une acidité plus faible une capacité d'échange d'ions allant de 0,5 à 4,0 mmiliéquivalents/gramme de polymère sec.

6. Procédé selon la revendication 1 ou 5, dans lequel les groupes d'échange d'ions ayant une acidité plus faible sont des groupes acide carboxylique ou des groupes acide phosphorique.

7. Procédé selon l'une des revendications 1 à 6, dans lequel ledit polymère fluoré présente les motifs répétitifs (a) et (b):

(a) $—(—CF_2—CXX'—)—$

(b)

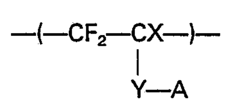

où:

X représente un atome de fluor, de chlore ou d'hydrogène ou bien —$CF_3$;

X' représente X ou $CF_3(CF_2—)_m—$;

m représente un nombre entier allant de 1 à 5;

Y représente le motif suivant:

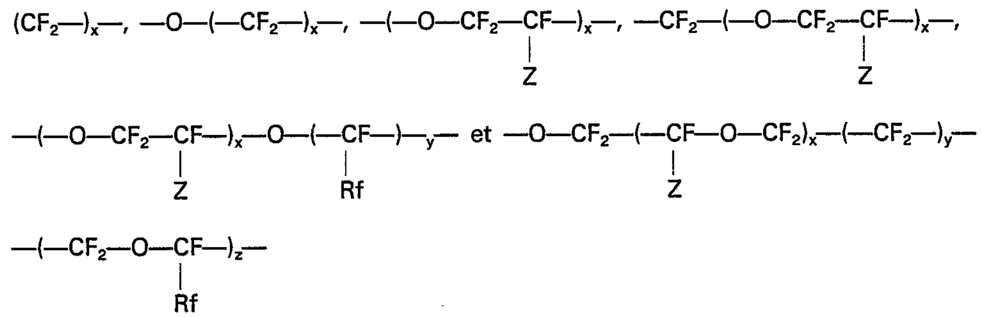

où:

x, y et z représentent respectivement un nombre entier allant de 1 à 10;

Z et Rf représentent —F ou un groupe perfluoroalkyle en $C_1$—$C_{10}$; et

A représente —COOM ou —$SO_3M$ ou un groupe fonctionnel qui peut être converti en —COOM ou —$SO_3M$ par hydrolyse ou neutralisation, tel que —CN, —COF, —COOR ou —$SO_2F$, et M représente l'hydrogène ou un atome de métal alcalin.

8. Procédé selon la revendication 7, dans lequel ladite membrane échangeuse d'ions est en contact avec au moins l'une parmi l'anode et la cathode.